# EUROPEAN PATENT APPLICATION

(11) **EP 4 647 722 A2**
(43) Date of publication of application: **12.11.2025**
(21) Application number: 25204823.6
(22) Date of filing: 14.04.2023
(51) Int. Cl.: G01C 21/20

(54) **A METHOD FOR NAVIGATING AN AUTONOMOUS VEHICLE WHEN DRIVING IN AN AREA**

(30) Priority: 26.04.2022 WO PCT/EP2022/060966
(62) Divisional of application: 23724653.3
(71) Applicant: Volvo Autonomous Solutions AB, 405 08 Göteborg (SE)
(72) Inventor: JOHANSSON, Gustaf, 416 54 GÖTEBORG (SE); ROGENFELT, Åsa, 414 78 GÖTEBORG (SE); NORESSON, Oskar, 411 27 GÖTEBORG (SE)
(74) Representative: Kransell & Wennborg KB

(57) **Abstract**

The invention relates to a method for navigating an autonomous vehicle (1) when driving in an area (A), the method comprising:
- using (S100) a predetermined map (Aₘₐₚ) of the area (A) for the navigation,
wherein the predetermined map comprises a plurality of connected segments (S1,...,S12), each segment defining a portion of a driving path for the autonomous vehicle (1) to follow;
- in response to obtaining a mission instruction, navigating (S200) the autonomous vehicle (1) from one point (A1) to another point (A2) in the area (A) by finding a driving path defined by a number of connected segments of the plurality of connected segments,
wherein at least one of the connected segments is associated with at least one of the following predetermined keys and/or rules for the autonomous vehicle (1):
- a predetermined access key, wherein the predetermined access key must be accessible for the autonomous vehicle (1) in order to be allowed to drive in the at least one segment,
- a predetermined navigation rule defining which sensor to use for the navigation in the at least one segment and/or which type of navigation technique to use in the at least one segment,
- a predetermined trigger rule to trigger a work task, such as a loading or unloading sequence, for the autonomous vehicle (1) at a point in time when the autonomous vehicle (1) is driving in the at least one segment. The invention also relates to a control unit (10), an autonomous vehicle (1), a computer program, a computer readable medium and a control system (100)

## Description

### TECHNICAL FIELD

The invention relates to a computer-implemented method for navigating an autonomous vehicle when driving in an area. The invention further relates to a control unit for navigating an autonomous vehicle, an autonomous vehicle, a computer program, a computer readable medium and a control system for controlling a fleet of autonomous vehicles.

The invention can be applied for heavy-duty vehicles, such as trucks, buses and construction equipment. Although the invention will be described with respect to an autonomous truck, the invention is not restricted to this particular vehicle, but may also be used for other vehicles such as buses, wheel loaders, dump trucks, excavators etc.

### BACKGROUND

A fleet of autonomous vehicles which are operating in an area may be controlled by providing control instructions to the vehicles from a control center. For example, the fleet of autonomous vehicles may operate in a construction site, a mining area, a terminal area, a harbour, or any other type of confined area. The control may for example be performed by a central control center which is located at the area and/or or by a remote control center which is not located at the area.

The control instructions may be instructions to perform missions, such as loading and/or unloading of goods/material, instructions to drive autonomously from one point to another point in the area, etc.

The areas in which the autonomous vehicles are operating typically have different characteristics. For example, one area, such as a mining area, may have a combination of open areas and tunnels in which the vehicles are driving, whereas another area, such as a construction site, may be an open area without any tunnels. Furthermore, the types of missions for the autonomous vehicles may vary between different areas. Still further, as yet another example, the number of loading and unloading locations and their positions may vary between different areas.

In view of the above, the autonomous vehicles may need to be adapted and tailored for the specific area in which they are operating. This may include to adapt the navigation software used in the autonomous vehicle, i.e. the software which is configured to navigate the vehicle in the area. For example, where to drive, how to drive, where loading/unloading spots are located, etc., may be defined in the navigation software of each vehicle. This adaptation of each autonomous vehicle for the specific area is most often time consuming and costly.

Therefore, there is a strive to develop more efficient techniques for navigating autonomous vehicles in an area.

### SUMMARY

An object of the invention is to provide an improved method for navigating an autonomous vehicle when driving in an area. More specifically, an object of the invention is to provide a more cost-efficient method for navigating an autonomous vehicle when driving in an area, or at least to provide a suitable alternative. Other objects of the invention are to provide an improved control unit for navigating an autonomous vehicle, an improved autonomous vehicle, a computer program, a computer readable medium and an improved control system for controlling a fleet of autonomous vehicles, or at least to provide suitable alternatives.

According to a first aspect of the invention, the object is at least partly achieved by a method according to claim 1.

Hence, there is provided a computer-implemented method for navigating an autonomous vehicle when driving in an area. The method comprises:
- using a predetermined map of the area for the navigation, wherein the predetermined map comprises a plurality of connected segments, each segment defining a portion of a driving path for the autonomous vehicle to follow;
- in response to obtaining a mission instruction, navigating the autonomous vehicle from one point to another point in the area by finding a driving path defined by a number of connected segments of the plurality of connected segments.

At least one of the connected segments may be associated with the following rule for the autonomous vehicle:
- a predetermined navigation rule defining which sensor to use for the navigation in the at least one segment.

By the provision of a method as disclosed herein, the control of an autonomous vehicle when driving in an area can be achieved in a more cost-efficient manner. More specifically, by the at least one predetermined rule for the autonomous vehicle, area specific information which relate to how the vehicle shall navigate and be controlled in the area can be added directly to the predetermined map, which herein is a digital map, and not as specific software code for each vehicle. In other words, the predetermined rules for the autonomous vehicle are preferably part of the predetermined map. Thereby, the complexity of the autonomous vehicle can be reduced. This also implies a scalable approach where the autonomous vehicle can be prepared for operation for a specific area in shorter time. In addition, any adjustments relating to the control and navigation of the autonomous vehicle in the specific area can be made in shorter time, thereby increasing flexibility.

For example, by the predetermined navigation rule which is associated with at least one connected segment, which navigation sensor to use can be decided by information which is included in the predetermined map. Thereby, the navigation software and/or hardware in the autonomous vehicle can be made less complicated. This also implies reduced required processing power for the autonomous vehicle, faster adaptation to new areas, a scalable configuration etc.

Optionally, at least one of the connected segments is associated with a predetermined access key for the autonomous vehicle, wherein the predetermined access key must be accessible for the autonomous vehicle in order to be allowed to drive in the at least one segment. Thereby, similar to the above, the control of an autonomous vehicle when driving in an area may be achieved in a more cost-efficient manner. More specifically, by the at least one predetermined key for the autonomous vehicle, area specific information which relate to how the vehicle shall navigate and be controlled in the area can be added directly to the predetermined map and not as specific software code for each vehicle.

For example, by the predetermined access key which is associated with at least one connected segment, the access to a connected segment for the autonomous vehicle can be decided by information which is included in the predetermined map. Thereby, the navigation software and/or hardware in the autonomous vehicle can be made less complicated. This also implies reduced required processing power for the autonomous vehicle, faster adaptation to new areas, a scalable configuration etc.

Optionally, the accessibility of the predetermined access key is varied over time. Thereby, increased flexibility can be achieved. For example, it has been realized that an area which is transforming over time, such as a construction site or a mining area, may transform so that the access of the autonomous vehicle to certain portions of the area is also required to change over time. Accordingly, by varying the predetermined access key over time, improved navigation in the area is achieved in a cost-efficient manner.

Optionally, the accessibility of the predetermined access key is dependent on if another vehicle is currently driving in the at least one segment. It has further been realized that in some areas, portions of driving paths may be too narrow for allowing more than one vehicle to drive in the portions of the driving paths at the same time. As such, by making the predetermined access key dependent on if another vehicle is currently driving in the at least one segment, it can e.g. be prevented that two or more vehicles are driving in the at least one segment at the same time. Accordingly, the predetermined access key may only be accessible if no other vehicle is driving in the at least one segment, i.e. when the at least one segment is free from other vehicles.

Optionally, the accessibility of the predetermined access key is dependent on the type and/or characteristics of the autonomous vehicle. Thereby, a more flexible navigation can be achieved which is adapted to the specific vehicle and its characteristics. Still optionally, the characteristics of the autonomous vehicle are related to at least one of a weight of the vehicle, a weight of a load carried by the vehicle and a type of load carried by the vehicle. Thereby, certain segments can for example be avoided during driving when the autonomous vehicle is not suitable for driving in at least one segment. This can for example be when one segment relates to an uphill and the autonomous vehicle is currently loaded to such an extent that it would not be able to drive in the uphill. As such, this allows the autonomous vehicle to find a more appropriate driving path where the autonomous vehicle can drive without unnecessary interruptions/disturbances.

Optionally, at least one segment which is associated with a predetermined access key is a single lane driving path in which vehicles are allowed to be driven in opposite directions, and wherein the predetermined access key is only accessible to the autonomous vehicle when the single lane driving path is at least free from other vehicles driving in an opposite direction with respect to the autonomous vehicle. Thereby, the risk of collisions can be reduced. Also, it can thereby be avoided that two vehicles will get stuck in the single lane driving path.

Optionally, the predetermined navigation rule is varied over time. This implies increased flexibility. Still optionally, the predetermined navigation rule is dependent on a transformation of the area over time. Accordingly, it has further been realized that which sensor to use may vary over time as a consequence of the transformation of the area over time. Thereby, by varying the navigation rule based on this, increased flexibility is achieved.

Optionally, the predetermined navigation rule is dependent on at least one of ambient weather conditions and time of day during driving in the area. Thereby, the predetermined navigation rule may be updated, such as varied over time, such that navigation sensors which are more appropriate for the specific situation are used in addition to, or instead of, other navigation sensors. For example, ambient light conditions may be used for determining whether a camera should be used for the navigation or if another type of navigation sensor should be used instead, or in addition.

Still optionally, the predetermined navigation rule is dependent on a change of at least one of ambient weather conditions and light conditions during driving in the area. Thereby, more appropriate navigation sensors may be used in the respective segments, implying improved navigation. For example, one segment may be in an outdoor environment and a following segment may be in an indoor environment, or vice versa, wherein the predetermined navigation rule is changed between the segments in dependence on a change in ambient weather conditions and/or light conditions between the segments. By way of example, a change in ambient weather conditions and/or light conditions when entering a tunnel may result in a performance reduction of an environment perception sensor, e.g., due to fog on a sensor surface. In such situation, another navigation sensor may be used instead of, or in addition to, the environment perception sensor. For example, a RADAR (RAdio Detection And Ranging) sensor may be used instead of, or in addition to, a LIDAR (LIght Detection And Ranging) sensor when entering the tunnel, if, e.g., the change in the ambient weather conditions and/or light conditions fulfil a criterion.

Still optionally, the predetermined navigation rule is dependent on an accessibility to a navigation satellite system in the at least one segment. For example, if the accessibility is below a threshold, e.g., reception is below a threshold, another navigation sensor may be used instead of, or in addition to, a navigation sensor for a navigation satellite system.

Optionally, the predetermined navigation rule is dependent on a surface friction level in the at least one segment. Thereby, further improved navigation in the at least one segment may be achieved. For example, if the autonomous vehicle comprises an odometry sensor, such as a wheel speed sensor, for estimating a change in position over time, information from the sensor may be less reliable when the friction level is below a threshold. Accordingly, by way of example, when an estimated friction level of the surface in the at least one segment is below a threshold, the predetermined navigation rule for the at least one segment may be updated such that another navigation sensor is used instead of, or in addition to, the odometry sensor, for the navigation. Information about the surface friction level may for example be obtained by sensor data measured by the autonomous vehicle, sensor data measured by another vehicle, and/or any other data indicative of the friction level of the surface.

Optionally, at least one of the connected segments is associated with a predetermined trigger rule to trigger a work task, such as a loading or unloading sequence, for the autonomous vehicle at a point in time when the autonomous vehicle is driving in the at least one segment. Thereby, similar to the above, the control of an autonomous vehicle when driving in an area may be achieved in a more cost-efficient manner. More specifically, by the at least one predetermined trigger rule for the autonomous vehicle, area specific information which relate to how the vehicle shall navigate and be controlled in the area can be added directly to the predetermined map and not as specific software code for each vehicle.

For example, by the predetermined trigger rule which is associated with at least one connected segment, triggering of a work task, such as a loading or unloading sequence, can be decided by information which is included in the predetermined map. Thereby, similar to the above, the navigation software and/or hardware in the autonomous vehicle can be made less complicated. This also implies reduced required processing power for the autonomous vehicle, faster adaptation to new areas, a scalable configuration etc.

Optionally, the predetermined trigger rule is varied over time. This implies increased flexibility. For example, where to load and unload goods/material may change over time. Thereby, by varying the predetermined trigger rule over time, a more flexible control of the autonomous vehicle can be achieved. For example, the predetermined trigger rule may be dependent on a transformation of the area over time. Accordingly, where to load and unload of goods/material may also be dependent on the transformation of the area over time. As such, by way of example, the predetermined trigger rule may be dependent on the transformation of the area over time in that a loading position or an unloading position for the autonomous vehicle in the at least one segment is varied in dependence on the transformation of the area.

Optionally, at least one of the plurality of connected segments is adjusted over time, such as adjusted in dependence on a transformation of the area over time. Thereby, the driving paths can be adjusted over time, in dependence on the transformation of the area over time. This implies increased flexibility.

Optionally, the predetermined keys and/or rules are assigned to different segments of the plurality of segments. Accordingly, by way of example, the predetermined map may comprise a plurality of connected segments where a respective predetermined key and/or rule is associated with a respective segment. The predetermined keys and/or rules may be varied over time, be adapted to the specific area etc. as e.g. mentioned herein. As such, a more flexible navigation of the autonomous vehicle in an area is achieved, requiring less processing power for the autonomous vehicle, faster adaptation to a new area, a scalable approach etc.

Preferably, each segment is associated with at least one predetermined access key. Accordingly, the predetermined access keys must be accessible for the autonomous vehicle in order to be allowed to drive in each respective segment. By way of example, at least one of the segments may be associated with a plurality of predetermined access keys, wherein each predetermined access key for the at least one of the segments must be accessible for the autonomous vehicle in order to be allowed to drive in that segment.

According to a second aspect of the invention, the object is at least partly achieved by a control unit according to claim 11.

Hence, there is provided a control unit for navigating an autonomous vehicle when driving in an area, wherein the control unit is configured to perform the steps of the method according to any one of the embodiments of the first aspect of the invention.

It shall be noted that all embodiments of the first aspect of the invention are combinable with all embodiments of the second aspect of the invention, and vice versa. Advantages and effects of the second aspect of the invention are analogous to advantages and effects of the first aspect of the invention.

According to a third aspect of the invention, the object is at least partly achieved by an autonomous vehicle according to claim 12. Hence, there is provided an autonomous vehicle comprising means for navigating the vehicle in an area, and further comprising a control unit according to any one of the embodiments of the second aspect of the invention. The means for navigating the vehicle in the area may for example comprise any one of a LIDAR (Light Detection And Ranging) sensor, a RADAR (RAdio Detection And Ranging) sensor, an ultrasonic senor, a sonar (SOund Navigation And Ranging) sensor, a camera, a GNSS (Global Navigation Satellite System) sensor, such as a GPS (Global Positioning System) sensor. The autonomous vehicle may further comprise one or more actuators, such as actuators for steering, braking and/or propulsion of the vehicle. Accordingly, the control unit may be configured to issue control signals to the one or more actuators so that the autonomous vehicle is following the driving path. The autonomous vehicle may further comprise one or more actuators for triggering a loading and/or an unloading sequence. For example, the unloading sequence may be a tipping sequence for tipping a load.

It shall be noted that all embodiments of the first and second aspects of the invention are combinable with all embodiments of the third aspect of the invention, and vice versa.

According to a fourth aspect of the invention, the object is at least partly achieved by a computer program according to claim 13. Hence, there is provided a computer program comprising program code means for performing the steps of any of the embodiments of the first aspect of the invention when said program is run on a computer, such as on the control unit according to the second aspect of the invention.

According to a fifth aspect of the invention, the object is at least partly achieved by a computer readable medium according to claim 14. Hence, there is provided a computer readable medium carrying a computer program comprising program code means for performing the steps of any of the embodiments of the first aspect of the invention when said program is run on a computer, such as on the control unit according to the second aspect of the invention.

According to a sixth aspect of the invention, the object is at least partly achieved by a control system according to claim 15. Hence, there is provided a control system for controlling a fleet of autonomous vehicles which are driving in an area, wherein the autonomous vehicles are vehicles according to the third aspect of the invention, and wherein the control system is configured to provide one or more mission instructions to each respective vehicle, wherein any one of the mission instructions is indicative of driving from one point to another point in the area.

The control system may comprise a predetermined map as disclosed herein. Accordingly, the predetermined map may be stored in the control system and/or in the respective vehicle of the fleet of autonomous vehicles.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a flowchart of a method according to an example embodiment of the invention,
Fig. 2 is a schematic view of a predetermined map to be used for navigating an autonomous vehicle in an area according to an example embodiment of the present invention,
Fig. 3 is a perspective view of an autonomous vehicle according to an example embodiment of the present invention, and
Fig. 4 is a schematic view of a control system and a fleet of autonomous vehicles which are driving in an area according to an example embodiment of the invention.

### DETAILED DESCRIPTION OF EXAMPLE EMBODIMENTS OF THE INVENTION

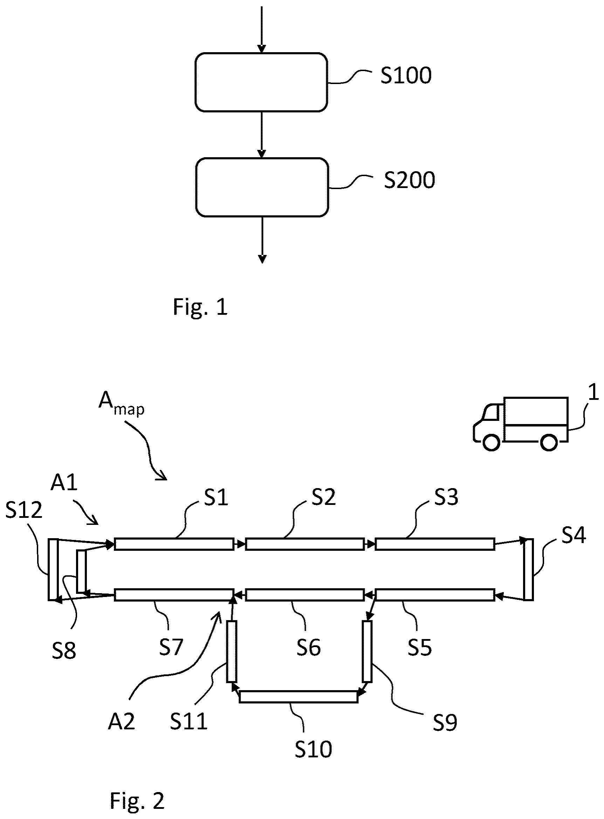

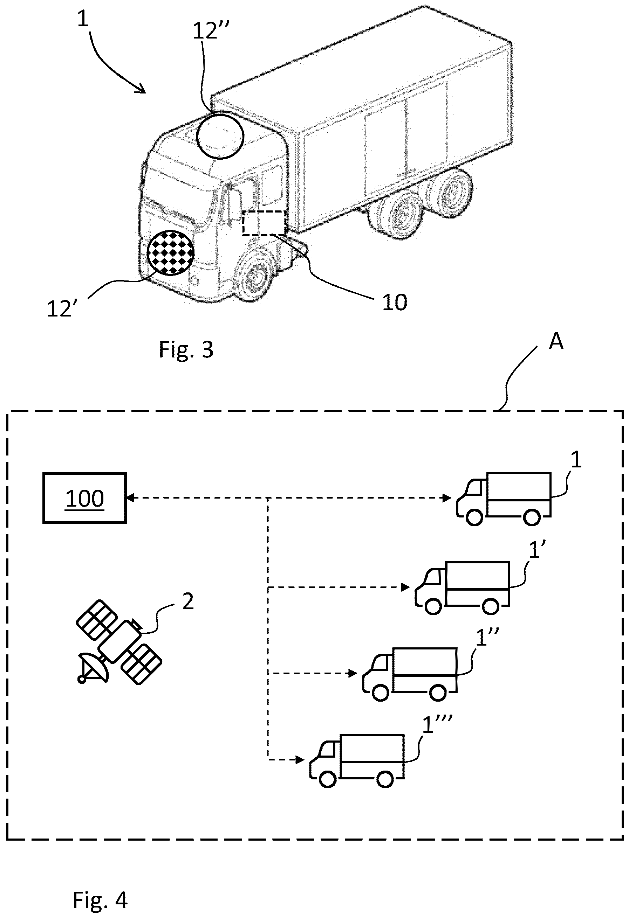

With reference to especially figs. 1-3, a method according to an example embodiment of the present invention will be described. Fig. 1 depicts a flowchart of the method, fig. 2 depicts a predetermined map Aₘₐₚ to be used for navigating an autonomous vehicle 1 when driving in an area A, as shown in fig. 4, and fig. 3 depicts an autonomous vehicle 1.

The autonomous vehicle 1 may be any type of vehicle. For example, it may be a heavy-duty truck 1 as shown in fig. 3. Alternatively, by way of example, the autonomous vehicle may be any type of working machine, such as a wheel loader, dump truck, excavator etc. Still further, the vehicle may be a bus, a passenger car, or any other type of vehicle used for moving passengers and/or goods/material.

With reference to fig. 3, the autonomous vehicle 1 comprises means 12', 12" for navigating the vehicle in the area A. In the shown embodiment, 12' refers to a LIDAR sensor which is mounted at the front of the vehicle 1. The other reference, 12", refers to a GNSS sensor. It shall however be noted that any other navigation sensor as e.g. mentioned herein may be used for the navigation.

The predetermined map Aₘₐₚ as shown in fig. 2 comprises a plurality of connected segments S1,...,S12. The arrows between the segments S1,...,S12 indicate the connections between the segments. The connected segments S1,...,S12 may in one embodiment be denoted a topology of the area A. Each segment S1,...,S12 defines a portion of a driving path for the autonomous vehicle 1 to follow.

The method comprises:
S100: using the predetermined map Aₘₐₚ of the area A for the navigation, and
S200: in response to obtaining a mission instruction, navigating the autonomous vehicle 1 from one point A1 to another point A2 in the area A by finding a driving path defined by a number of connected segments of the plurality of connected segments S1,...,S12.

In the shown embodiment, the driving path from A1 to A2 may be defined by the connected segments S1, S2, S3, S4, S5 and S6.

At least one of the connected segments S1,...,S12 is associated with at least one of the following predetermined keys and/or rules for the autonomous vehicle 1:
- a predetermined access key, wherein the predetermined access key must be accessible for the autonomous vehicle 1 in order to be allowed to drive in the at least one segment,
- a predetermined navigation rule defining which sensor to use for the navigation in the at least one segment,
- a predetermined trigger rule to trigger a work task, such as a loading or unloading sequence, for the autonomous vehicle 1 at a point in time when the autonomous vehicle 1 is driving in the at least one segment.

For example, the segment S6 may be associated with a predetermined access key. As such, when driving from A1 to A2 as mentioned in the above, the predetermined access key must be accessible for the autonomous vehicle 1 in order to be allowed to drive in the segment S6. If the predetermined access key for segment S6 is not accessible, the autonomous vehicle 1 will be required to find another driving path, and/or required to wait until the predetermined access key is accessible. By way of example, when the predetermined access key for segment S6 is not accessible, the autonomous vehicle 1 may instead drive from A1 to A2 along a driving path defined by the segments S1, S2, S3, S4, S5, S9, S10 and S11. Preferably, each segment S1, ..., S12 is associated with at least one predetermined access key. Accordingly, when driving along a driving path, the predetermined access key(s) for each respective segment along the driving path has to be accessible for the autonomous vehicle 1 to be allowed to enter each respective segment.

The predetermined access key may be varied over time. For example, the accessibility may relate to the time of day, e.g. if it is dark or light, if another vehicle is currently driving in the segment S6 or if the segment S6 is closed for any other reason, such as due to reconstruction or maintenance work of the driving path. Additionally, or alternatively, the accessibility of the predetermined access key for the autonomous vehicle 1 may be dependent on the type and/or characteristics of the autonomous vehicle 1. For example, the autonomous vehicle 1 may be too large or heavy to drive along the segment S6.

The characteristics of the autonomous vehicle 1 may additionally or alternatively be related to at least one of a weight of the vehicle 1, a weight of a load carried by the vehicle 1 and a type of load carried by the vehicle 1. For example, the autonomous vehicle 1 may not be allowed to drive in the segment S6 when its total weight, including load, exceeds a predetermined threshold weight. For example, the segment S6 may define a portion of the driving path including a bridge which can only accommodate a weight below the predetermined threshold weight.

Additionally, or alternatively, the at least one segment S6 which is associated with a predetermined access key may be a single lane driving path in which vehicles are allowed to be driven in opposite directions, and wherein the predetermined access key is only accessible to the autonomous vehicle 1 when the single lane driving path is at least free from other vehicles driving in an opposite direction with respect to the autonomous vehicle 1. For example, with reference to the example when the autonomous vehicle 1 is driving from A1 to A2, it may take a detour by driving along S9, S10 and S11 instead of using the segment S6, when another vehicle is driving along S6 in the opposite direction. Thereby it can be avoided that the autonomous vehicle 1 collides with the other vehicle in the segment S6.

For example, the segments S1,...,S12 may be associated with predetermined navigation rules. As such, when driving from A1 to A2 as mentioned in the above, predetermined navigation rules may be used for the navigation. By way of example, some segments may be suitable for using the LIDAR sensor 12', such as when driving in a tunnel, whilst other segments may be suitable for using the GNSS sensor 12", such as when driving in an open area which is not occluded by tall buildings, trees etc. Accordingly, by way of example, the predetermined navigation rule for the at least one connected segment may define which type of navigation sensor(s) to use for the navigation in the at least one segment. The type of navigation sensor(s) may for example be associated with a specific navigation technique, such as any type of GNSS navigation or any type of map matching navigation. Map matching navigation typically uses environment perception sensor(s), e.g., camera(s), LIDAR sensor(s), RADAR sensor(s), and/or ultrasonic sensor(s), for navigating in an area.

The predetermined navigation rule may also be varied over time. For example, the predetermined navigation rule may relate to the time of day, e.g. if it is dark or light, if another vehicle is currently driving in the segment, current weather etc. The current weather may be indicative of raining or snowing, if there is a risk of sun glare, if there is a risk of wheel slippage along the driving path, etc. Accordingly, in some situations it may be preferred to use one type of navigation sensor and not preferred, or less preferred, to use another type of navigation sensor. For example, some navigation sensors may be sensitive to sun glare. As such, when there is a risk of sun glare in a segment, e.g., when an estimated sun glare is above a threshold, the navigation rule can be to avoid using a navigation sensor which is sensitive to sun glare and to instead, or in addition, use another sensor which is better suited for the situation. As another example, if the autonomous vehicle 1 comprises odometry sensors for the navigation, e.g., wheel speed sensors, weather related information indicative of a slippery surface in at least one of the segments may be used to vary the navigation rule in the at least one of the segments. For example, the navigation rule may be varied over time, i.e. updated, to rely less or more on the odometry sensors for the navigation in the at least one of the segments, and to instead, or in addition, use another type of navigation sensor in the at least one of the segments.

The predetermined navigation rule may be dependent on a surface friction level in the at least one segment. For example, if the autonomous vehicle 1 comprises the above mentioned odometry sensor for estimating a change in position over time, information from the sensor may be less reliable when the friction level is below a threshold. Accordingly, by way of example, when an estimated friction level of the surface in the at least one segment is below a threshold, the predetermined navigation rule for the at least one segment may be updated such that another navigation sensor is used instead of, or in addition to, the odometry sensor, for the navigation. Information about the surface friction level may for example be obtained by sensor data measured by the autonomous vehicle 1, sensor data measured by another vehicle, and/or any other data indicative of the friction level of the surface.

The predetermined navigation rule may be dependent on a change of at least one of ambient weather conditions and light conditions during driving in the area A. For example, one segment may be in an outdoor environment and a following segment may be in an indoor environment, or vice versa, wherein the predetermined navigation rule is changed between the segments in dependence on a change in ambient weather conditions and/or light conditions between the segments. By way of example, a change in ambient weather conditions and/or light conditions when entering a tunnel may result in a performance reduction of an environment perception sensor, e.g., due to fog on a sensor surface. In such situation, another navigation sensor may be used instead of, or in addition to, the environment perception sensor. For example, a RADAR sensor may be used instead of, or in addition to, a LIDAR sensor when entering the tunnel. More specifically, the RADAR sensor may be less sensitive to fog than the LIDAR sensor.

The predetermined navigation rule may additionally or alternatively be dependent on a transformation of the area A over time. For example, piles of material in the area A may grow or diminish over time. This may in turn affect how well e.g. a GNSS sensor can receive a signal from a satellite 2 as e.g. shown in fig. 4. Accordingly, by adapting the predetermined navigation rule in dependence on the transformation of the area A over time, the navigation in the area A will be more reliable and robust, reducing the risk of navigation errors. The predetermined navigation rule may accordingly be dependent on an accessibility to a navigation satellite system 2 in the at least one segment.

For example, the segments S4 and S8 may be associated with predetermined trigger rules. As such, by way of example, when driving from A1 to A2 as mentioned in the above, the autonomous vehicle 1 may be triggered to unload material when it enters the segment S4. For example, the segment S4 may be associated with a pit where material is to be unloaded. The predetermined trigger rule may be triggered to an operator who is controlling the autonomous vehicle 1 remotely. Accordingly, when the predetermined trigger rule is triggered to the operator, e.g. via an HMI (human machine interface), the operator may decide whether to unload the material or not. Additionally, or alternatively, the predetermined trigger rule may trigger the autonomous vehicle 1 to automatically unload the material.

Other examples of predetermined trigger rules are rules to shovel away material, such as snow or gravel, sweeping of a road section, etc.

Furthermore, when driving from A2 back to A1, e.g. when driving via the connected segments S7 and S8, the autonomous vehicle 1 may be triggered to load material when it enters the segment S8. For example, the segment S8 may be associated with a pile with material to be loaded. The predetermined trigger rule may also here be triggered to an operator who is controlling the autonomous vehicle 1 remotely. Accordingly, when the predetermined trigger rule is triggered to the operator, e.g. via an HMI, the operator may decide whether to load the material or not. Additionally, or alternatively, the predetermined trigger rule may trigger the autonomous vehicle 1 to automatically load the material.

The predetermined trigger rule may also be varied over time. For example, the predetermined trigger rule may relate to the time of day, e.g. if it is dark or light, if another vehicle is currently driving in the segment, current weather, if there is a pile of material associated with the segment, if there is a pit associated with the segment etc.

The predetermined trigger rule may additionally or alternatively be dependent on a transformation of the area A over time. For example, the predetermined trigger rule may be dependent on the transformation of the area A over time in that a loading position or an unloading position for the autonomous vehicle 1 in the at least one segment is varied in dependence on the transformation of the area A.

At least one of the plurality of connected segments S1,..., S12 may be adjusted over time, such as adjusted in dependence on a transformation of the area A over time.

Accordingly, in view of the above, the predetermined map Aₘₐₚ which is used for the navigation may be updated over time. The predetermined map Aₘₐₚ may be provided on the autonomous vehicle 1 and/or it may be continuously accessed and/or intermittently downloaded from a remote location, preferably via wireless communication means, such as wireless telecommunication technology.

The predetermined keys and/or rules are preferably assigned to different segments of the plurality of segments. As mentioned in the above, the segment S6 is associated with a predetermined access key, the segment S4 is associated with a predetermined trigger rule, the segment S8 is associated with another predetermined trigger rule and all the segments S1,...,S12 are associated with predetermined navigation rules. Thereby, improved navigation in the area A is achieved, which implies increased flexibility, less required processing power for the navigation and/or a scalable configuration.

The autonomous vehicle 1 as shown in fig. 3 further comprises a control unit 10. The control unit 10 is configured to perform the steps of the method according to any one of embodiments as disclosed herein.

The control unit 10 is herein an electronic control unit. It may comprise processing circuitry which is adapted to run a computer program as disclosed herein. The control unit 10 may comprise hardware and/or software for performing the method according to the invention. In an embodiment the control unit 10 may be denoted a computer. The control unit 10 may be constituted by one or more separate sub-control units. Even though the control unit 10 preferably is a vehicle on-board control unit, it shall be noted that the control unit may additionally or alternatively be a vehicle off-board control unit, such as a control unit being part of a computer cloud system.

With reference to fig. 4, a control system 100 for controlling a fleet of autonomous vehicles 1, 1', 1", 1‴ which are driving in the area A is depicted. The autonomous vehicles 1, 1', 1", 1‴ are autonomous vehicles according to the third aspect of the invention. The control system 100 is configured to provide one or more mission instructions to each respective vehicle 1, 1', 1", 1‴, wherein any one of the mission instructions is indicative of driving from one point A1 to another point A2 in the area A. The arrows between the control system 100 and the vehicles 1, 1', 1", 1‴ are indicative of the provided control instructions. The vehicles 1, 1', 1", 1‴ may also be configured to provide status information to the control system 100, such as information about mission status, speed, if the vehicle is loaded etc. The control system 100 may as shown be located at the area A, such as in the form of a control center at the area A. The control system 100 may comprise an HMI for one or more operators which are monitoring the work conducted by the autonomous vehicles 1, 1', 1", 1‴ and/or which are issuing mission instructions via the HMI. The control system 100 may comprise processing circuitry which is adapted to run a computer program. The control system 100 may comprise hardware and/or software for issuing the control signals and/or for operating the HMI. In an embodiment the control system 100 may be denoted a computer. The control system 100 may be constituted by one or more separate sub-control systems. Even though the control system 100 as shown is located at the area A it shall be noted that the control system 100 may also be a remote control system which is not located at the area A.

In the following, examples and possible feature combinations of the disclosure are presented as a list of items:
1. A computer-implemented method for navigating an autonomous vehicle (1) when driving in an area (A), the method comprising:
   - using (S100) a predetermined map (Aₘₐₚ) of the area (A) for the navigation,
      wherein the predetermined map comprises a plurality of connected segments (S1,...,S12), each segment defining a portion of a driving path for the autonomous vehicle (1) to follow;
   - in response to obtaining a mission instruction, navigating (S200) the autonomous vehicle (1) from one point (A1) to another point (A2) in the area (A) by finding a driving path defined by a number of connected segments of the plurality of connected segments,
   wherein at least one of the connected segments is associated with at least one of the following predetermined key and/or rule for the autonomous vehicle (1):
   - a predetermined access key, wherein the predetermined access key must be accessible for the autonomous vehicle (1) in order to be allowed to drive in the at least one segment,
   - a predetermined trigger rule to trigger a work task, such as a loading or unloading sequence, for the autonomous vehicle (1) at a point in time when the autonomous vehicle (1) is driving in the at least one segment.
2. The method according to item 1, wherein the accessibility of the predetermined access key is varied over time.
3. The method according to any one of the preceding items, wherein the accessibility of the predetermined access key is dependent on if another vehicle is currently driving in the at least one segment.
4. The method according to any one of the preceding items, wherein the accessibility of the predetermined access key is dependent on the type and/or characteristics of the autonomous vehicle (1).
5. The method according to item 4, wherein the characteristics of the autonomous vehicle are related to at least one of a weight of the vehicle, a weight of a load carried by the vehicle and a type of load carried by the vehicle.
6. The method according to any one of the preceding items, wherein at least one segment which is associated with a predetermined access key is a single lane driving path in which vehicles are allowed to be driven in opposite directions, and wherein the predetermined access key is only accessible to the autonomous vehicle (1) when the single lane driving path is at least free from other vehicles driving in an opposite direction with respect to the autonomous vehicle (1).
7. The method according to any one of the preceding items, wherein at least one of the connected segments is associated with a predetermined navigation rule defining which sensor to use for the navigation in the at least one segment.
8. The method according to item 7, wherein the predetermined navigation rule is varied over time.
9. The method according to item 8, wherein the predetermined navigation rule is dependent on a transformation of the area (A) over time.
10. The method according to any one of items 7-9, wherein the predetermined navigation rule is dependent on at least one of ambient weather conditions and time of day during driving in the area (A).
11. The method according to any one of items 7-10, wherein the predetermined navigation rule is dependent on a change of at least one of ambient weather conditions and light conditions during driving in the area (A).
12. The method according to any one of items 7-11, wherein the predetermined navigation rule is dependent on an accessibility to a navigation satellite system (2) in the at least one segment.
13. The method according to any one of items 7-12, wherein the predetermined navigation rule is dependent on a surface friction level in the at least one segment.
14. The method according to any one of the preceding items, wherein the predetermined trigger rule is varied over time.
15. The method according to item 14, wherein the predetermined trigger rule is dependent on a transformation of the area (A) over time.
16. The method according to item 15, wherein the predetermined trigger rule is dependent on the transformation of the area over time in that a loading position or an unloading position for the autonomous vehicle (1) in the at least one segment is varied in dependence on the transformation of the area (A).
17. The method according to any one of the preceding items, wherein at least one of the plurality of connected segments (S1,..., S12) is adjusted over time, such as adjusted in dependence on a transformation of the area (A) over time.
18. The method according to any one of the preceding items, wherein the predetermined keys and/or rules are assigned to different segments of the plurality of segments.
19. A control unit (10) for navigating an autonomous vehicle (1) when driving in an area (A), wherein the control unit (10) is configured to perform the steps of the method according to any one of the preceding items.
20. An autonomous vehicle (1) comprising means (12', 12") for navigating the vehicle in an area (A), and further comprising a control unit (10) according to item 19.
21. A computer program comprising program code means for performing the steps of any of items 1-18 when said program is run on a computer, such as on the control unit according to item 19.
22. A computer readable medium carrying a computer program comprising program code means for performing the steps of any of items 1-18 when said program product is run on a computer, such as on the control unit according to item 19.
23. A control system (100) for controlling a fleet of autonomous vehicles (1, 1', 1", 1‴) which are driving in an area (A), wherein the autonomous vehicles are vehicles according to item 20, and wherein the control system (100) is configured to provide one or more mission instructions to each respective vehicle (1, 1', 1", 1‴), wherein any one of the mission instructions is indicative of driving from one point (A1) to another point (A2) in the area (A).

In the following, examples and possible feature combinations of the disclosure are presented as a list of Examples:
1. A computer-implemented method for navigating an autonomous vehicle (1) when driving in an area (A), the method comprising:
   - using (S100) a predetermined map (Aₘₐₚ) of the area (A) for the navigation,
      wherein the predetermined map comprises a plurality of connected segments (S1,...,S12), each segment defining a portion of a driving path for the autonomous vehicle (1) to follow;
   - in response to obtaining a mission instruction, navigating (S200) the autonomous vehicle (1) from one point (A1) to another point (A2) in the area (A) by finding a driving path defined by a number of connected segments of the plurality of connected segments,
   wherein at least one of the connected segments is associated with the following predetermined rule for the autonomous vehicle (1):
   - a predetermined navigation rule defining which sensor to use for the navigation in the at least one segment.
2. The method according to Example 1, wherein at least one of the connected segments is associated with a predetermined access key for the autonomous vehicle (1), wherein the predetermined access key must be accessible for the autonomous vehicle (1) in order to be allowed to drive in the at least one segment.
3. The method according to Example 2, wherein the accessibility of the predetermined access key is varied over time.
4. The method according to any one of Examples 2-3, wherein the accessibility of the predetermined access key is dependent on if another vehicle is currently driving in the at least one segment.
5. The method according to any one of Examples 2-4, wherein the accessibility of the predetermined access key is dependent on the type and/or characteristics of the autonomous vehicle (1).
6. The method according to Example 5, wherein the characteristics of the autonomous vehicle are related to at least one of a weight of the vehicle, a weight of a load carried by the vehicle and a type of load carried by the vehicle.
7. The method according to any one of Examples 2-6, wherein at least one segment which is associated with a predetermined access key is a single lane driving path in which vehicles are allowed to be driven in opposite directions, and wherein the predetermined access key is only accessible to the autonomous vehicle (1) when the single lane driving path is at least free from other vehicles driving in an opposite direction with respect to the autonomous vehicle (1).
8. The method according to any one of the preceding Examples, wherein the predetermined navigation rule is varied over time.
9. The method according to Example 8, wherein the predetermined navigation rule is dependent on a transformation of the area (A) over time.
10. The method according to any one of the preceding Examples, wherein the predetermined navigation rule is dependent on at least one of ambient weather conditions and time of day during driving in the area (A).
11. The method according to any one of the preceding Examples, wherein the predetermined navigation rule is dependent on a change of at least one of ambient weather conditions and light conditions during driving in the area (A).
12. The method according to any one of the preceding Examples, wherein the predetermined navigation rule is dependent on an accessibility to a navigation satellite system (2) in the at least one segment.
13. The method according to any one of the preceding Examples, wherein the predetermined navigation rule is dependent on a surface friction level in the at least one segment.
14. The method according to any one of the preceding Examples, wherein at least one of the connected segments is associated with a predetermined trigger rule to trigger a work task, such as a loading or unloading sequence, for the autonomous vehicle (1) at a point in time when the autonomous vehicle (1) is driving in the at least one segment.
15. The method according to Example 14, wherein the predetermined trigger rule is varied over time.
16. The method according to Example 15, wherein the predetermined trigger rule is dependent on a transformation of the area (A) over time.
17. The method according to Example 16, wherein the predetermined trigger rule is dependent on the transformation of the area over time in that a loading position or an unloading position for the autonomous vehicle (1) in the at least one segment is varied in dependence on the transformation of the area (A).
18. The method according to any one of the preceding Examples, wherein at least one of the plurality of connected segments (S1,..., S12) is adjusted over time, such as adjusted in dependence on a transformation of the area (A) over time.
19. The method according to any one of the preceding Examples, wherein the predetermined keys and/or rules are assigned to different segments of the plurality of segments.
20. A control unit (10) for navigating an autonomous vehicle (1) when driving in an area (A), wherein the control unit (10) is configured to perform the steps of the method according to any one of the preceding Examples.
21. An autonomous vehicle (1) comprising means (12', 12") for navigating the vehicle in an area (A), and further comprising a control unit (10) according to Example 20.
22. A computer program comprising program code means for performing the steps of any of Examples 1-19 when said program is run on a computer, such as on the control unit according to Example 20.
23. A computer readable medium carrying a computer program comprising program code means for performing the steps of any of Examples 1-19 when said program product is run on a computer, such as on the control unit according to Example 20.
24. A control system (100) for controlling a fleet of autonomous vehicles (1, 1', 1", 1‴) which are driving in an area (A), wherein the autonomous vehicles are vehicles according to Example 21, and wherein the control system (100) is configured to provide one or more mission instructions to each respective vehicle (1, 1', 1", 1‴), wherein any one of the mission instructions is indicative of driving from one point (A1) to another point (A2) in the area (A).

It is to be understood that the present invention is not limited to the embodiments described above and illustrated in the drawings; rather, the skilled person will recognize that many changes and modifications may be made within the scope of the appended claims.

## Claims

1. A computer-implemented method for navigating an autonomous vehicle (1) when driving in an area (A), the method comprising:
- using (S100) a predetermined map (Aₘₐₚ) of the area (A) for the navigation,
wherein the predetermined map comprises a plurality of connected segments (S1,...,S12), each segment defining a portion of a driving path for the autonomous vehicle (1) to follow;
- in response to obtaining a mission instruction, navigating (S200) the autonomous vehicle (1) from one point (A1) to another point (A2) in the area (A) by finding a driving path defined by a number of connected segments of the plurality of connected segments,
wherein at least one of the connected segments is associated with the following predetermined key for the autonomous vehicle (1):
- a predetermined access key, wherein the predetermined access key must be accessible for the autonomous vehicle (1) in order to be allowed to drive in the at least one segment, wherein the accessibility of the predetermined access key is dependent on if another vehicle is currently driving in the at least one segment.

2. The method according to claim 1, wherein the accessibility of the predetermined access key is varied over time.

3. The method according to any one of the preceding claims, wherein the accessibility of the predetermined access key is dependent on the type and/or characteristics of the autonomous vehicle (1).

4. The method according to claim 3, wherein the characteristics of the autonomous vehicle are related to at least one of a weight of the vehicle, a weight of a load carried by the vehicle and a type of load carried by the vehicle.

5. The method according to any one of the preceding claims, wherein at least one segment which is associated with a predetermined access key is a single lane driving path in which vehicles are allowed to be driven in opposite directions, and wherein the predetermined access key is only accessible to the autonomous vehicle (1) when the single lane driving path is at least free from other vehicles driving in an opposite direction with respect to the autonomous vehicle (**1**).

6. The method according to any one of the preceding claims, wherein at least one of the connected segments is associated with the following predetermined rule for the autonomous vehicle (1):
- a predetermined trigger rule to trigger a work task, such as a loading or unloading sequence, for the autonomous vehicle (1) at a point in time when the autonomous vehicle (1) is driving in the at least one segment.

7. The method according to claim 6, wherein the predetermined trigger rule is varied over time.

8. The method according to claim 7, wherein the predetermined trigger rule is dependent on a transformation of the area (A) over time.

9. The method according to claim 8, wherein the predetermined trigger rule is dependent on the transformation of the area over time in that a loading position or an unloading position for the autonomous vehicle (1) in the at least one segment is varied in dependence on the transformation of the area (A).

10. The method according to any one of the preceding claims, wherein the predetermined keys and/or rules are assigned to different segments of the plurality of segments.

11. A control unit (10) for navigating an autonomous vehicle (1) when driving in an area (A), wherein the control unit (10) is configured to perform the steps of the method according to any one of the preceding claims.

12. An autonomous vehicle (1) comprising means (12', 12") for navigating the vehicle in an area (A), and further comprising a control unit (10) according to claim 11.

13. A computer program comprising program code means for performing the steps of any of claims 1-10 when said program is run on a computer, such as on the control unit according to claim 11.

14. A computer readable medium carrying a computer program comprising program code means for performing the steps of any of claims 1-10 when said program product is run on a computer, such as on the control unit according to item 11.

15. A control system (100) for controlling a fleet of autonomous vehicles (1, 1', 1", 1‴) which are driving in an area (A), wherein the autonomous vehicles are vehicles according to claim 12, and wherein the control system (100) is configured to provide one or more mission instructions to each respective vehicle (1, 1', 1", 1‴), wherein any one of the mission instructions is indicative of driving from one point (A1) to another point (A2) in the area (A).
